# EUROPÄISCHE PATENTSCHRIFT

(11) **EP 2 922 180 B1**
(45) Veröffentlichungstag und Bekanntmachung des Hinweises auf die Patenterteilung: **02.11.2016**
(21) Anmeldenummer: 14160261.5
(22) Anmeldetag: 17.03.2014
(51) Int. Cl.: H02K 3/47, H02K 29/08

(54) **Redundantes bürstenloses Antriebssystem**
Redundant brushless drive system
Système d'entraînement redondant sans balais

(43) Veröffentlichungstag der Anmeldung: 23.09.2015
(73) Patentinhaber: Dr. Fritz Faulhaber GmbH & Co. KG, 71101 Schönaich (DE)
(72) Erfinder: Wallner, Herbert, 71101 Schönaich (DE); Jadhav, Sanjay, 71032 Böblingen (DE)
(74) Vertreter: Patent- und Rechtsanwälte Dr. Solf & Zapf

(56) Entgegenhaltungen:
- DE-A1- 1 463 855
- DE-A1- 3 432 946
- US-A- 4 394 594
- US-A- 5 006 765
- US-A- 5 323 075

## Beschreibung

Die Erfindung betrifft ein redundantes bürstenloses Antriebssystem, umfassend eine Spule mit mehreren voneinander unabhängig betreibbaren Wicklungssträngen und ein Sensorsystem mit mehreren voneinander unabhängig betreibbaren Sensorgruppen zur Erfassung der Drehposition eines Rotors und zur Kommutierung der Wicklungsstränge.

Redundante bürstenlose Antriebssysteme werden insbesondere bei Anwendungen mit erhöhter Ausfallsicherheit, wie zum Beispiel bei der Luftfahrt, verwendet und sind grundsätzlich bekannt.

In der EP 0 754 365 B1 ist ein redundanter Elektromotor beschrieben. Bei dem Elektromotor weist der Rotor zwei axial hintereinander angeordnete Magnetpolpaare auf, wobei der Stator insbesondere aus zwei entsprechend axial hintereinander angeordneten, getrennten Spulen gebildet ist, die jeweils einem Magnetpolpaar zugeordnet sind. Die beiden Spulen sind unabhängig voneinander ansteuerbar. Ein derartiger Elektromotor hat den Nachteil, dass relativ viel Bauraum für die Anordnung der Magnetpolpaare und der Spulen benötigt wird.

In der DE 31 40 034 ist eine Ausführungsform eines redundanten bürstenlosen Gleichstrommotors beschrieben. Der Gleichstrommotor weist genutete Statorwicklungen auf. Der Rotor weist vier Magnetpolpaare auf. Die Statorwicklungen bestehen aus vier Teilsträngen, und das Sensorsystem besteht aus vier Sensorgruppen für die unabhängige Positionsauswertung des Rotors und die Kommutierung der Teilstränge. Somit weist der Gleichstrommotor vier separat beschaltete und steuerbare elektrische Motoreinheiten auf. Bei einem Parallelbetrieb der Motoreinheiten ist die Gesamtleistung des Motors die Summe der Einzelleistungen der Motoreinheiten. Ein derartiger Gleichstrommotor benötigt relativ viel Bauraum. Bei Ausfall einer Sensorgruppe oder eines Teilstranges einer Motoreinheit laufen die anderen drei Motoreinheiten durch die separaten Teilstränge mit den zugehörigen separaten Sensorgruppen weiter. Dies hat zudem den Nachteil, dass bei einem Ausfall einer Motoreinheit die Motorleistung relativ geringer wird. Alternativ kann auch immer nur eine Motoreinheit alleine betrieben werden, wobei eine zusätzliche Steuereinheit einen Ausfall der momentan aktiven Motoreinheit erkennen würde und dann auf eine andere Motoreinheit umschalten würde. Dies hätte den Nachteil, dass zusätzliche Bauteile für eine derartige Steuereinheit benötigt würden.

Weiterer Stand der Technik ist DE3432946A1 und US4394594.

Der Erfindung liegt die Aufgabe zugrunde, ein redundantes bürstenloses Antriebssystem zur Verfügung zu stellen, das besonders einfach, leicht und kompakt ausgebildet ist, wobei bei behebbaren Ausfällen die Eigenschaften des Antriebssystems möglichst gleichbleibend ausgebildet sind.

Die Aufgabe wird erfindungsgemäß durch das in Anspruch 1 definierte redundante bürstenlose Antriebssystem gelöst. Vorteilhafte Ausgestaltungen der Erfindung sind Gegenstand der abhängigen Ansprüche 2 - 7.

Die Spule ist als eine bifilare Luftspaltwicklung ausgebildet, die mindestens zwei separat ansteuerbare Wicklungsstränge aus Einzeldrähten umfasst, und das Sensorsystem mindestens zwei entlang der Motorachse jeweils hintereinander, zueinander parallel und jeweils symmetrisch zur Motorachse angeordnete Sensorgruppen umfasst. Dies ermöglicht eine besonders leichte Bauweise, da durch die Luftspaltwicklung auf einen Eisenkern verzichtet werden kann, wobei gleichzeitig eine ausreichende Stabilität für die Spule gewährleistet ist. Zudem wird durch die bifilare Luftspaltwicklung mit mindestens zwei separat ansteuerbaren Wicklungssträngen eine redundante Spule ermöglicht, die extrem wenig Bauraum benötigt. Die spezielle Anordnung der Sensorgruppen ermöglicht ein redundantes Sensorsystem für die redundante Spule, das ebenfalls extrem wenig Bauraum benötigt. Ein derartiger Aufbau eines redundanten Antriebssystems erspart weitere Komponenten, wie zum Beispiel weitere Lager oder zusätzliche Komponenten in der Spule.

In einer bevorzugten Ausführung der Erfindung sind die Windungen der Wicklungsstränge parallel zueinander und nebeneinander mit gleichem Abstand zur Motorachse und insbesondere aus identischen Einzeldrähten gewickelt. Dies ermöglicht Wicklungsstränge, die nahezu gleiche elektrische Eigenschaften aufweisen, so dass bei einem Wechsel von einem Wicklungsstrang zu einem anderen Wicklungsstrang während des Betriebs des Antriebssystems nahezu gleiche Leistungseigenschaften aufweist.

Insbesondere ist in einer Ausbildung des erfindungsgemäßen Antriebssystems das Sensorsystem in einem als Doppelgeber ausgebildeten integrierten Encoderchip angeordnet. Dies reduziert den Bauraum für das Sensorsystem und ermöglicht eine besonders platzsparende und einfache Anordnung der Sensorgruppen.

In einer weiteren bevorzugten Ausbildung des erfindungsgemäßen Antriebssystems ist zur Ansteuerung eines separaten Wicklungsstrangs jeweils eine separate Sensorgruppe verwendbar. Erfindugsgemäss ist eine Encoderplatine derart ausgebildet, dass eine Zuordnung der Sensorgruppen zu einem Wicklungsstrang konfigurierbar ist, so dass entweder die erste Sensorgruppe zur Ansteuerung des ersten Wicklungsstrangs und die zweite Sensorgruppe zur Ansteuerung des zweiten Wicklungsstrangs, oder die erste Sensorgruppe zur Ansteuerung des zweiten Wicklungsstrangs und die zweite Sensorgruppe zur Ansteuerung des ersten Wicklungsstrangs verwendet wird.

Weitere Ausführungsformen und Vorteile des erfindungsgemäßen Antriebssystems ergeben sich aus der nachfolgenden Figurenbeschreibung und den Unteransprüchen.

Es zeigen:
- Fig. 1: eine Explosionszeichnung einer Ausführungsform eines erfindungsgemäßen bürstenlosen Antriebssystems mit Teilschnitt im Bereich der Spule,
- Fig. 2: ein Teilschnitt eines erfindungsgemäßen bürstenlosen Antriebssystems entlang der Mittelachse X-X,
- Fig. 3: eine schematische Darstellung der Verschaltplatine der Spule eines erfindungsgemäßen bürstenlosen Antriebssystems,
- Fig. 4: eine schematische Skizze der Encoderplatine eines erfindungsgemäßen bürstenlosen Antriebssystems und
- Fig. 5: eine schematische Skizze der Statorwicklungen, des Gebermagneten und des Encoderchips eines erfindungsgemäßen bürstenlosen Antriebssystems.

In den verschiedenen Figuren der Zeichnung sind gleiche Teile stets mit denselben Bezugszeichen versehen.

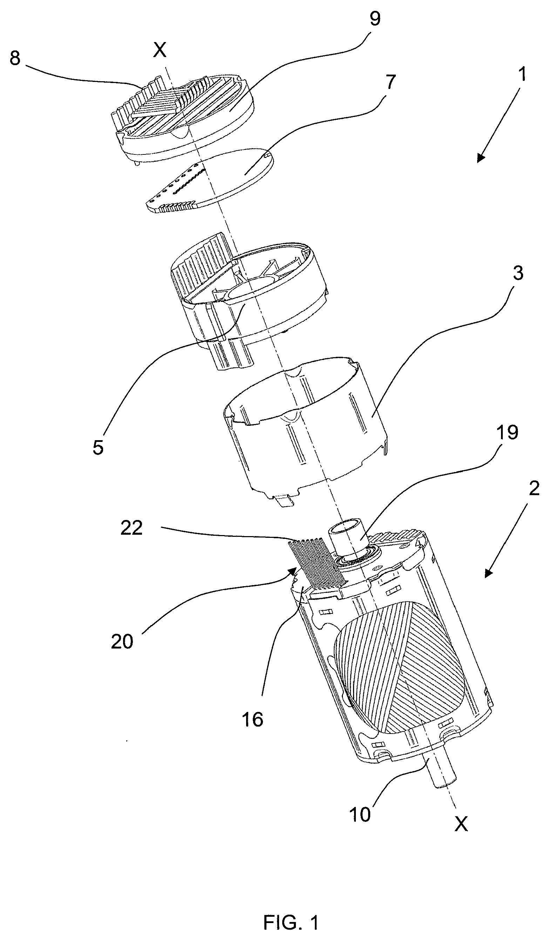

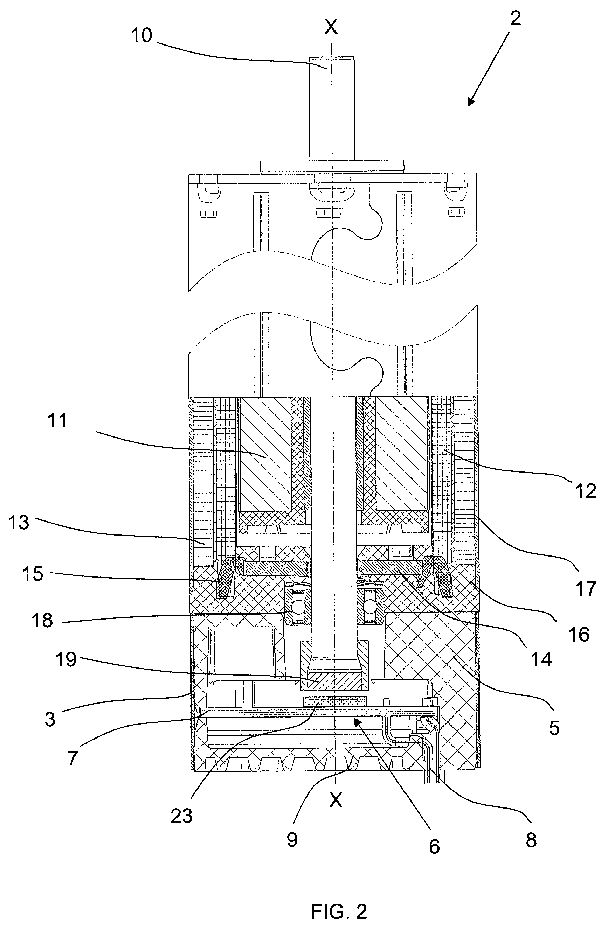

In Fig. 1 und Fig. 2 ist eine bevorzugte Ausführungsform eines erfindungsgemäßen bürstenlosen Antriebssystems 1 dargestellt. Das Antriebssystem 1 umfasst insbesondere eine Motoreinheit 2, ein Gehäuse 3, einen Flansch 5, ein Sensorsystem 6, eine Encoderplatine 7, Antriebssystemanschlüsse 8, bestehend aus Motoranschlüssen und Encoderanschlüssen, und einen Deckel 9.

Die Motoreinheit 2 umfasst insbesondere eine Motorachse 10, einen auf der Motorachse 10 befestigten Rotormagnet 11, eine zylinderförmige Spule 12, ein die Spule 12 hülsenartig umschließendes Eisenrückschlusselement 13, eine Verschaltplatine 14, eine Wickelhilfe 15, eine Abdeckung 16 und eine Gehäusehülse 17. Die Abdeckung 16 weist eine Durchgangsöffnung auf, durch die die Motorachse 10 geführt ist. An der Außenseite der Abdeckung 16 ist ein Achslager 18 zur Lagerung der Motorachse 10 angeordnet. Die Spule 12 und das Eisenrückschlusselement 13 bilden den Stator der Motoreinheit 2.

An der dem Sensorsystem 6 zugewandten Stirnseite der Motorachse 10 ist insbesondere ein Gebermagnet 19 angeordnet und mit der Motorachse 10 fest verbunden. Die Motoreinheit 2 weist insbesondere ein Stanzgitter 20 auf (nur in Fig. 1 dargestellt), das an der dem Deckel 9 zugewandten Stirnseite der Motoreinheit 2 in Richtung des Deckels 9 aus der Abdeckung 16 der Motoreinheit 2 herausragt und durch den Flansch 5 mit dem Sensorsystem, insbesondere über die Encoderplatine 7, elektrisch verbunden ist.

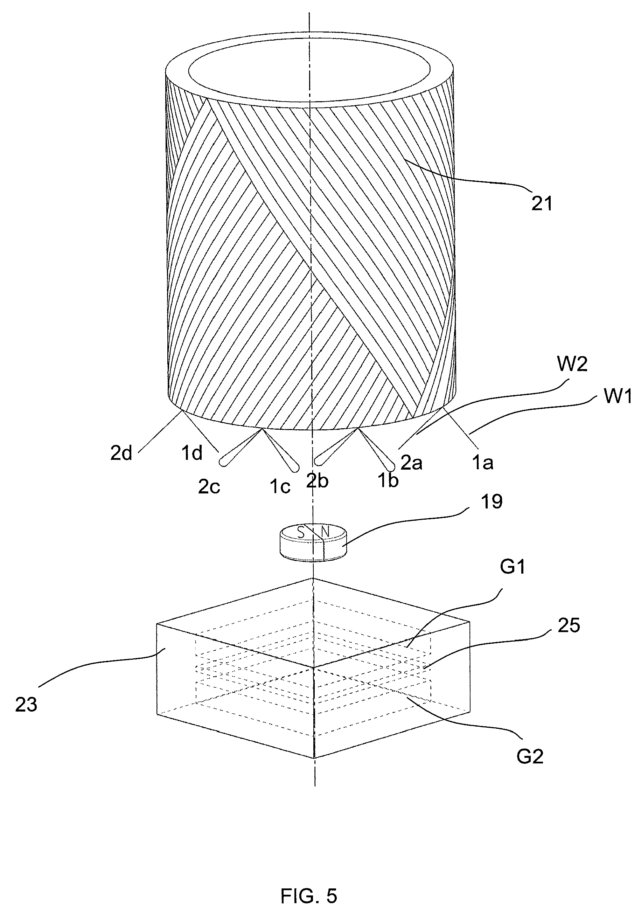

Die Gehäusehülse 17 ist zur Verdeutlichung der Spule 12 der Motoreinheit 2 in der Fig. 1 teilweise geschnitten dargestellt, um die Wicklungen der Spule 12 der Motoreinheit 2 darstellen zu können. Die Spule 12 ist insbesondere als eine Glockenankerspule mit Wickelhilfe gemäß der EP 1 855 372 B1 ausgebildet (siehe auch Fig. 5). Die Spule 12 umfasst insbesondere eine freitragende, verbackene Luftspaltwicklung 21 ohne Eisenkern. Die Luftspaltwicklung 21 ist erfindungsgemäß als eine bifilare Luftspaltwicklung 21 ausgebildet, die insbesondere zwei voneinander unabhängig ansteuerbare, vorteilhafterweise symmetrische ausgebildete Wicklungsstränge W1, W2 aus Einzeldrähten umfasst. Die Windungen der Wicklungsstränge W1, W2 sind vorteilhafterweise identisch ausgebildet und verlaufen parallel zueinander und aneinander anliegend insbesondere jeweils mit gleichem Abstand zur Motorachse 10.

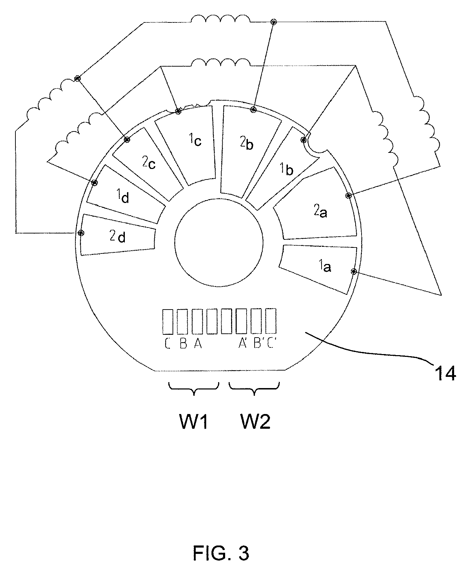

In Fig. 3 ist die Verschaltplatine 14 für die Spule 12 und in Fig. 5 unter anderem die Spule 12 mit der bifilaren Luftspaltwicklung 21 dargestellt. Beide Wicklungsstränge W1, W2 der bifilaren Luftspaltwicklung 21 weisen insbesondere jeweils vier Abzapfungen, bestehend aus den jeweiligen Wicklungsanfängen 1a, 2a, den jeweiligen Wicklungsschlaufen 1 b, 1 c, 2b, 2c, und den jeweiligen Wicklungsenden 1d, 2d, auf, die den jeweiligen Wicklungsstrang W1, W2 in jeweils drei Spulensegmente unterteilt. Gemäß Fig. 5 ist die Luftspaltwicklung 21 vorteilhafterweise als eine bifilare Schrägwicklung mit sich kreuzenden Wickellagen ausgebildet. In Fig. 5 sind die Einzeldrähte der Wicklungsstränge W1, W2 nur an den separaten Abzapfungen 1a, 1b, 1c, 1d, 2a, 2b, 2c. 2d zu erkennen, da die Einzeldrähte in den Wickellagen direkt nebeneinander liegen und in Fig. 5 nur als eine gemeinsame Linie dargestellt sind.

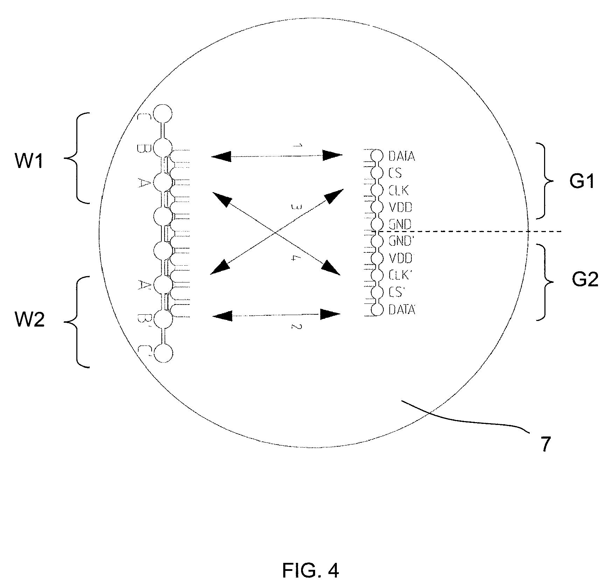

Die Verschaltplatine 14 ist gemäß Fig. 3 mit den jeweiligen Abzapfungen 1a, 1b, 1c, 1 d für die Spulensegmente des ersten Wicklungsstrangs W1 und den Abzapfungen 2a, 2b, 2c, 2d für die Spulensegmente des zweiten Wicklungsstrangs W2 verbunden und weist entsprechende Kontaktelemente A, B, C für den ersten Wicklungsstrang W1 und A', B', C' für den zweiten Wicklungsstrang W2 zur Verbindung mit dem Stanzgitter 20 auf. Das Stanzgitter 20 umfasst mehrere Kontaktstifte 22, die in der Motoreinheit 2 in die Kontaktelemente A, B, C, A', B', C' eingreifen und sich elektrisch verbinden. Das Stanzgitter 20 verbindet die Abzapfungen 1 a, 1 b, 1 c, 1 d des ersten Wicklungsstrangs W1 und die Abzapfungen 2a, 2b, 2c, 2d des zweiten Wicklungsstrangs W2 von der Verschaltplatine 14 mit entsprechenden für jeden Wicklungsstrang W1, W2 separaten Anschlüssen an dem Sensorsystem 6, insbesondere an der Encoderplatine 7 (siehe auch Fig. 4). Die Verschaltplatine 14 kann in einer nicht dargestellten vorteilhaften Ausführungsform Konfigurationsmittel, insbesondere Jumperverbindungen, aufweisen, um die Wicklungsstränge W1, W2 zu einem gemeinsam ansteuerbaren Wicklungsstrang zusammenzuschalten. Dadurch entfällt die Redundanzfunktion der Spule, jedoch wird die Leistung des Motors erhöht. Dabei ist immer noch eine Redundanz im Sensorsystem vorhanden.

In Fig. 4 ist die Encoderplatine 7 schematisch dargestellt. Das Sensorsystem 6 ist insbesondere auf der Encoderplatine 7 angeordnet. Das Sensorsystem 6 ist insbesondere als ein integrierter Encoderchip 23 ausgebildet und umfasst zwei voneinander unabhängig ansteuerbare Sensorgruppen G1, G2 (siehe auch Fig. 5). Die Sensorgruppen G1, G2 umfassen jeweils insbesondere Hallsensoren. Jede Sensorgruppe G1, G2 ist über konfigurierbare Verbindungen über die Encoderplatine 7 mit den Abzapfungen 1 a, 1 b, 1 c, 1 d beziehungsweise 2a, 2b, 2c, 2d der Wicklungsstränge W1, W2 beliebig verbindbar. Somit ermöglicht das Sensorsystem 6 eine konfigurierbare Zuordnung der Sensorgruppen G1, G2 zu einem Wicklungsstrang W1, W2, so dass entweder die erste Sensorgruppe G1 zur Ansteuerung des ersten Wicklungsstrangs W1 und die zweite Sensorgruppe G2 zur Ansteuerung des zweiten Wicklungsstrangs W2 verwendet wird, oder die erste Sensorgruppe G1 zur Ansteuerung des zweiten Wicklungsstrangs W2 und die zweite Sensorgruppe G2 zur Ansteuerung des ersten Wicklungsstrangs G1 verwendet wird. Die Konfiguration kann insbesondere durch auf der Encoderplatine 7 angeordnete, nicht dargestellte Jumperverbindungen zwischen den Wicklungssträngen W1, W2 und den Sensorgruppen G1 und G2 erfolgen. Die Encoderplatine 7 weist elektrische Verbindungen zu allen elektrischen Antriebssystemanschlüssen 8, insbesondere zu den Encoderanschlüssen für die beiden Sensorgruppen G1, G2 und zu den Motoranschlüssen für die Wicklungsstränge W1, W2, auf. Die Antriebssystemanschlüsse 8 sind an dem Deckel 9 angeordnet und mit einer zusammenhängenden Kabelverbindung, insbesondere einem Flachbandkabel, verbindbar.

In Fig. 5 ist das Sensorsystem 6, der Gebermagnet 19 und die bifilare, eisenlose Luftspaltwicklung 21 mit den beiden Wicklungssträngen W1, W2 schematisch dargestellt. Die beiden Sensorgruppen G1, G2 sind erfindungsgemäß entlang der Motorachse 10 beziehungsweise der Mittelachse X-X der Motoreinheit 2 hintereinander, zueinander parallel und jeweils symmetrisch zur Motorachse 10 beziehungsweise der Mittelachse X-X ausgebildet. Die beiden Sensorgruppen G1, G2 sind in einem integrierten Encoderchip 23 durch eine elektrische Isolationsschicht 25 voneinander elektrisch isoliert. Somit detektieren beide Sensorgruppen G1, G2 die magnetischen Signale des Gebermagneten 19 unabhängig voneinander, gleichzeitig und in gleicher Weise.

Ein derartiges bürstenloses Antriebssystem 1 ermöglicht ein insbesondere elektrisch redundantes Antriebssystem 1. Fällt ein Paar aus einer Sensorgruppe G1, G2 und einem Wicklungsstrang W1, W2 durch einen Defekt eines Wicklungsstrangs W1, W2 oder einer Sensorgruppe G1, G2 aus, so kann das andere Paar aus einer Sensorgruppe G1, G2 und einem Wicklungsstrang W1, W2 die fehlerfreie Funktion des Gleichstrommotors 1 weiter gewährleisten. Selbst wenn eine Sensorgruppe G1, G2 des einen Paares und ein Wicklungsstrang W1, W2 des anderen Paares ausfällt, kann durch eine Umkonfiguration der Zuordnung der Paare die noch funktionierende Sensorgruppe G1, G2 dem noch funktionierenden Wicklungsstrang W1, W2 als neues Paar zugeordnet werden, so dass die Motorfunktion weiterhin voll und insbesondere bei gleichbleibender Leistung gewährleistet werden kann.

Zudem ermöglicht die bifilare Luftspaltwicklung 21 mit der speziellen Ausgestaltung der Wicklungsstränge W1, W2 eine besonders kompakte Bauform des redundanten Antriebssystems 1. Der als Doppelgeber ausgebildete integrierte Encoderchip 23 verbessert die kompakte Bauform weiter.

Dadurch dass die beiden Wicklungsstränge W1, W2 annähernd gleich ausgebildet und die Windungen insbesondere parallel zueinander und nebeneinander mit gleichem Abstand zur Motorachse 10 gewickelt sind, bleiben die Eigenschaften des Motors und insbesondere die Leistung bei einem Ausfall eines Wicklungsstranges W1, W2 und/oder einer Sensorgruppe G1, G2 nahezu unverändert.

Die Erfindung ist nicht auf die dargestellten und beschriebenen Ausführungsbeispiele beschränkt, sondern umfasst auch weitere Ausführungsformen im Rahmen des durch die Patentansprüche definierten Schutzbereiches.

### Bezugszeichenliste

- 1: Antriebssystem
- 2: Motoreinheit
- 3: Gehäuse
- 5: Flansch
- 6: Sensorsystem
- 7: Encoderplatine
- 8: Antriebssystemanschlüsse
- 9: Deckel
- 10: Motorachse
- 11: Rotormagnet
- 12: Spule
- 13: Eisenrückschlusselement
- 14: Verschaltplatine
- 15: Wickelhilfe
- 16: Abdeckung
- 17: Gehäusehülse
- 18: Achslager
- 19: Gebermagnet
- 20: Stanzgitter
- 21: Luftspaltwicklung
- 22: Kontaktstifte
- 23: Encoderchip
- 25: Isolationsschicht
- W1, W2: Wicklungsstrang
- 1a, 1b, 1c,1d: Abzapfungen (Wicklungsanfang, Wicklungsschlaufen, Wicklungsende)
- 2a, 2b, 2c,2d: Abzapfungen (Wicklungsanfang, Wicklungsschlaufen, Wicklungsende)
- A, B, C: Kontaktelemente
- A', B', C': Kontaktelemente
- G1, G2: Sensorgruppen

## Patentansprüche

1. Redundantes bürstenloses Antriebssystem (1), umfassend eine Spule (12) mit mehreren voneinander unabhängig betreibbaren Wicklungssträngen (W1, W2) und ein Sensorsystem (6) mit mehreren voneinander unabhängig betreibbaren Sensorgruppen (G1, G2) zur Erfassung der Drehposition eines Rotors (11) und zur Kommutierung der Wicklungsstränge (W1, W2),
**dadurch gekennzeichnet, dass**
die Spule (12) als eine bifilare Luftspaltwicklung (21) ausgebildet ist, die mindestens zwei separat ansteuerbare Wicklungsstränge (W1, W2) aus Einzeldrähten umfasst, und das Sensorsystem (6) mindestens zwei entlang der Motorachse (10) jeweils hintereinander, zueinander parallel und jeweils symmetrisch zur Motorachse (10) angeordnete Sensorgruppen (G1, G2) umfasst und eine Encoderplatine (7) derart ausgebildet ist, dass eine Zuordnung der Sensorgruppen (G1, G2) zu einem Wicklungsstrang (W1, W2) konfigurierbar ist, so dass entweder die erste Sensorgruppe (G1) zur Ansteuerung des ersten Wicklungsstrangs (W1) und die zweite Sensorgruppe (G2) zur Ansteuerung des zweiten Wicklungsstrangs (W2) verwendet wird, oder die erste Sensorgruppe (G1) zur Ansteuerung des zweiten Wicklungsstrangs (W2) und die zweite Sensorgruppe (G2) zur Ansteuerung des ersten Wicklungsstrangs (W1) verwendet wird.

2. Redundantes bürstenloses Antriebssystem (1) nach Anspruch 1,
**dadurch gekennzeichnet, dass**
die Windungen der Wicklungsstränge (W1, W2) aus identischen Einzeldrähten gewickelt sind.

3. Redundantes bürstenloses Antriebssystem (1) nach Anspruch 1 oder 2,
**dadurch gekennzeichnet, dass**
die Windungen der Wicklungsstränge (W1, W2) parallel zueinander und nebeneinander mit gleichem Abstand zur Motorachse (10) gewickelt sind.

4. Redundantes bürstenloses Antriebssystem (1) nach einem der Ansprüche 1 bis 3,
**dadurch gekennzeichnet, dass**
zur Ansteuerung eines Wicklungsstrangs (W1, W2) jeweils eine separate Sensorgruppe (G1, G2) mit jeweils einem separaten Wicklungsstrang (W1, W2) verschaltbar ist.

5. Redundantes bürstenloses Antriebssystem (1) nach einem der Ansprüche 1 bis 4,
**dadurch gekennzeichnet, dass**
das Sensorsystem (6) in einem als Doppelgeber ausgebildeten integrierten Encoderchip (23) angeordnet ist.

6. Redundantes bürstenloses Antriebssystem (1) nach einem der Ansprüche 1 bis 5,
**dadurch gekennzeichnet, dass**
ein mit der Motorachse (10) verbundener Gebermagnet (19) an der den Sensorgruppen (G1, G2) zugewandten Stirnseite der Motorachse (10) angeordnet ist.

7. Redundantes bürstenloses Antriebssystem (1) nach einem der Ansprüche 1 bis 6,
**dadurch gekennzeichnet, dass**
eine Verschaltplatine (14) Konfigurationsmittel aufweist, die die Wicklungsstränge (W1, W2) zu einem gemeinsam ansteuerbaren Wicklungsstrang zusammenschalten.

## Claims

1. Redundant brushless drive system (1), comprising a coil (12) including a plurality of phase windings (W1, W2) operable independently of one another and a sensor system (6) including a plurality of independently operable sensor groups (G1, G2) for capturing the rotational position of a rotor (11) and for commutating of the phase windings (W1, W2),
**characterized in that**
the coil (12) is configured as a bifilar, air-gap winding (21) that comprises at least two separately controllable phase windings (W1, W2) made from individual wires, and the sensor system (6) comprises at least two sensor groups (G1, G2) disposed along the motor axle (10) respectively one-behind-the-other parallel to each other and symmetrical to the motor axle (10), and an encoder circuit board (7) is configured such that an association of the sensor groups (G1, G2) to a phase winding (W1, W2) is configurable so that either the first sensor group (G1) is used for controlling of the first phase winding (W1) and the second sensor group (G2) for controlling the second phase winding (W2), or the first sensor group (G1) is used for controlling the second phase winding (W2) and the second sensor group (G2) for controlling the first phase winding (W1).

2. Redundant brushless drive system (1) according to Claim 1,
**characterized in that**
the windings of the phase winding (W1, W2) are wound from identical individual wires.

3. Redundant brushless drive system (1) according to Claim 1 or 2,
**characterized in that**
the windings of the phase windings (W1, W2) are wound parallel to each other and adjacent to each other with the same distance to the motor axle (10).

4. Redundant brushless drive system (1) according to one of Claims 1 to 3,
**characterized in that**
for controlling a phase winding (W1, W2) a separate sensor group (G1, G2) each including a separate phase winding (W1, W2) can be respectively be connected.

5. Redundant brushless drive system (1) according to one of Claims 1 to 4,
**characterized in that**
the sensor system (6) is disposed in an integrated encoder chip (23) configured as a double encoder.

6. Redundant brushless drive system (1) according to one of Claims 1 to 5,
**characterized in that**
a sensor magnet (19) connected to the motor axle (10) is positioned on the end side of the motor axle (10) facing the sensor groups (G1, G2).

7. Redundant brushless drive system (1) according to one of Claims 1 to 6,
**characterized in that**
a circuit board (14) includes configuration means that connect the phase windings (W1, W2) together into a common, controllable phase winding.

## Revendications

1. Système d'entraînement redondant sans balai (1) comprenant une bobine (12) ayant une pluralité de brins d'enroulement (W1, W2) pouvant être attaqués indépendamment les uns des autres et un système de capteur (6) comportant une pluralité de groupes de capteurs (G1, G2) pouvant être attaqués indépendamment les uns des autres pour détecter la position de rotation d'un rotor (11) et pour commuter les brins d'enroulement (W1, W2),
**caractérisé en ce que** la bobine (12) est réalisée sous la forme d'un enroulement d'entrefer bifilaire (21) qui comprend au moins deux brins d'enroulement (W1, W2) pouvant être attaqués séparément et constitués de fils individuels, et le système de capteur (6) comprend au moins deux groupes de capteurs (G1, G2) respectivement disposés l'un derrière l'autre le long de l'axe de moteur (10), parallèlement l'un à l'autre et respectivement symétriquement par rapport à l'axe de moteur (10) et **en ce qu'**une carte codeuse (7) est réalisée de manière à ce qu'une association des groupes de capteurs (G1, G2) à un brin d'enroulement (W1, W2) puisse être configurée soit afin que le premier groupe de capteurs (G1) soit utilisé pour attaquer le premier brin d'enroulement (W1) et que le second groupe de capteurs (G2) soit utilisé pour attaquer le second brin d'enroulement (W2), soit que le premier groupe de capteurs (G1) soit utilisé pour attaquer le second brin d'enroulement (W2) et que le second groupe de capteurs (G2) soit utilisé pour attaquer le premier brin d'enroulement (W1).

2. Système d'entraînement sans balai redondant (1) selon la revendication 1,
**caractérisé en ce que** les spires des brins d'enroulement (W1, W2) sont enroulées à partir de fils individuels identiques.

3. Système d'entraînement sans balai redondant (1) selon la revendication 1 ou 2,
**caractérisé en ce que** les spires des brins d'enroulement (W1, W2) sont enroulées parallèlement les unes aux autres et côte à côte avec un même espacement par rapport à l'axe de moteur (10).

4. Système d'entraînement sans balai redondant (1) selon l'une quelconque des revendications 1 à 3,
**caractérisé en ce que**, pour attaquer un brin d'enroulement (W1, W2), un groupe de capteurs séparé (G1, G2) peut être respectivement connecté à un brin d'enroulement séparé respectif (W1, W2).

5. Système d'entraînement sans balai redondant (1) selon l'une quelconque des revendications 1 à 4,
**caractérisé en ce que** le système de capteur (6) est disposé dans une puce codeuse (23) intégrée et réalisée sous la forme d'un transducteur double.

6. Système d'entraînement sans balai redondant (1) selon l'une quelconque des revendications 1 à 5, **caractérisé en ce qu'**un aimant transducteur (19) connecté à l'axe de moteur (10) est disposé sur la face avant de l'axe de moteur (10) qui est tournée vers le groupe de capteurs (G1, G2).

7. Système d'entraînement sans balai redondant (1) selon l'une quelconque des revendications 1 à 6,
**caractérisé en ce qu'**une carte de connexion (14) comporte des moyens de configuration qui interconnectent les brins d'enroulement (W1, W2) et un brin d'enroulement commun pouvant être attaqué.
